# EUROPEAN PATENT APPLICATION

(11) **EP 4 745 785 A1**
(43) Date of publication of application: **20.05.2026**
(21) Application number: 25209508.8
(22) Date of filing: 17.10.2025
(51) Int. Cl.: G06F 11/3668, G06F 11/3698

(54) **SYSTEM, METHOD, AND COMPUTER PROGRAM FOR EDITING A TEST CASE IN VEHICLE SOFTWARE TESTING**

(30) Priority: 15.11.2024 US 202418948770
(71) Applicant: TOYOTA JIDOSHA KABUSHIKI KAISHA, Toyota-shi, Aichi-ken 471-8571 (JP)
(72) Inventor: CHEN, Beck, Chuo-Ku, 103-0022 (JP); ARMELLINI, Nicola, Chuo-Ku, 103-0022 (JP); BACHELOR, Benjamin, 94304 Palo Alto, CA (US); POZIMENKO, Alexey, 94304 Palo Alto, CA (US); WU, Hao, 94304 Palo Alto, CA (US); WEBB, Edwin, 94304 Palo Alto, CA (US); AKIYAMA, Jun, Chuo-Ku, 103-0022 (JP); JAISHANKER, Vijay Saravana, 94304 Palo Alto, CA (US); REED, Sheldon Anthony, 94304 Palo Alto, CA (US); BHATKHANDE, Pranav Suhas, 94304 Palo Alto, CA (US); KANDRU, Nischel, 94304 Palo Alto, CA (US); WANG, Xiaoyu, Chuo-Ku, 103-0022 (JP); TSUKISHIMA, Ruriko, Chuo-Ku, 103-0022 (JP)
(74) Representative: D Young & Co LLP

(57) **Abstract**

Provided are system, method, and device for testing a vehicle software. According to example embodiments, the system may include: a memory storage storing computer-executable instructions; and at least one processor communicatively coupled to the memory storage, wherein the at least one processor may be configured to execute the instructions to: generate a graphical user interface; receive a search input from a user at the search area of the graphical user interface; display one or more test steps associated with the search input at the test steps area of the graphical user interface; receive a selection input selecting one of the one or more test steps displayed at the test steps area from the user; and enter a code associated with the selected one of the one or more test steps in the first portion of the graphical user interface.

## Description

### TECHNICAL FIELD

Systems, methods, and computer programs consistent with example embodiments of the present disclosure relate to vehicle software testing, and more specifically, relate to the editing of a test case in a vehicle software testing.

### BACKGROUND

In software development, a software is required to be tested in order to ensure that the software functions as intended, meets specified requirements, and performs reliably in various scenarios. Software testing is a crucial part of the software development life cycle (SDLC) and is performed to identify defects, errors, or bugs in the software before it is deployed to the actual system.

Testing of a software for a vehicle may be done by designing a test case comprising a plurality of test steps that are to be run within a test environment. The results of running the test case within the test environment may then be generated and viewed by a user in order to evaluate the software.

In the related art, designing the test case as well as each of the test steps is done by manually entering each of the test steps. However, such process is time consuming and error prone. Accordingly, there is a need for a system that can allow the user to quickly and efficiently add and edit test steps within a test case, thereby reducing the time for designing and running the test case.

### SUMMARY

Example embodiments of the present disclosure tests vehicle software. As such, example embodiments of the present disclosure allows for test steps to be quickly and efficiently added to a test case without the user having to manually type in such test steps.

According to example embodiments, a system is provided. The system may include: a memory storage storing computer-executable instructions; and at least one processor communicatively coupled to the memory storage, wherein the at least one processor may be configured to execute the instructions to: generate a graphical user interface comprising at least a first portion and a second portion, where the first portion may include a portion for entering a code, and where the second portion may include a search area and a test steps area; receive a search input from a user at the search area; display one or more test steps associated with the search input at the test steps area; receive a selection input selecting one of the one or more test steps displayed at the test steps area from the user; and enter a code associated with the selected one of the one or more test steps in the first portion.

According to example embodiments, the selection input may include a drag-and-drop input.

According to example embodiments, the first portion may further include a pop-up window; and the at least one processor may be further configured to execute the instructions to: receive a partial code input from the user at the first portion; display one or more test steps associated with the partial code input at the pop-up window; receive a selection input selecting one of the one or more test steps displayed at the pop-up window from the user; and replace the partial code input with a code associated with the selected one of the one or more test steps in the first portion.

According to example embodiments, the memory storage may include a plurality of predefined test steps; the one or more test steps associated with the search input may be obtained from the plurality of predefined test steps; the graphical user interface may further include an add option; and the at least one processor may be further configured to execute the instructions to: receive a selection input selecting the add option, and a new test step from the user; and add the new test steps to the plurality of predefined test steps.

According to example embodiments, the graphical user interface may further include a first run option and a second run option; and the at least one processor may be further configured to execute the instructions to: receive a selection input selecting the first run option from the user, or a selection input selecting the second run option from the user; in response to receiving the selection input selecting the first run option, run a test case comprising one or more test steps at the first portion online by utilizing continuous integration and continue delivery; and in response to receiving the selection input selecting the second run option, run the test case comprising the one or more test steps at the first portion offline without utilizing continuous integration and continue delivery.

According to example embodiments, the graphical user interface may further include a third run option and a fourth run option; and the at least one processor may be further configured to execute the instructions to: receive a selection input selecting the third run option from the user, or a selection input selecting the fourth run option from the user; in response to receiving the selection input selecting the third run option, maintain a simulated test environment after running a test case comprising one or more test steps at the first portion; and in response to receiving the selection input selecting the fourth run option, terminate the simulated test environment after running the test case comprising the one or more test steps at the first portion.

According to example embodiments, the code in the first portion may be in a natural language format.

According to example embodiments, a method is provided. The method may include: generating a graphical user interface comprising at least a first portion and a second portion, wherein the first portion may include a portion for entering a code, and wherein the second portion may include a search area and a test steps area; receiving a search input from a user at the search area; displaying one or more test steps associated with the search input at the test steps area; receiving a selection input selecting one of the one or more test steps displayed at the test steps area from the user; and entering a code associated with the selected one of the one or more test steps in the first portion.

According to example embodiments, the selection input may include a drag-and-drop input.

According to example embodiments, the first portion may further include a pop-up window; and the method may further include: receiving a partial code input from the user at the first portion; displaying one or more test steps associated with the partial code input at the pop-up window; receiving a selection input selecting one of the one or more test steps displayed at the pop-up window from the user; and replacing the partial code input with a code associated with the selected one of the one or more test steps in the first portion.

According to example embodiments, the method may be performed by a system comprising a memory storage that may include a plurality of predefined test steps; the one or more test steps associated with the search input may be obtained from the plurality of predefined test steps; the graphical user interface may further include an add option; and the method may further include: receiving a selection input selecting the add option, and a new test step from the user; and adding the new test steps to the plurality of predefined test steps.

According to example embodiments, the graphical user interface may further include a first run option and a second run option; and the method may further include: receiving a selection input selecting the first run option from the user, or a selection input selecting the second run option from the user; in response to receiving the selection input selecting the first run option, running a test case comprising one or more test steps at the first portion online by utilizing continuous integration and continue delivery; and in response to receiving the selection input selecting the second run option, running the test case comprising the one or more test steps at the first portion offline without utilizing continuous integration and continue delivery.

According to example embodiments, the graphical user interface may further include a third run option and a fourth run option; and the method may further include: receiving a selection input selecting the third run option from the user, or a selection input selecting the fourth run option from the user; in response to receiving the selection input selecting the third run option, maintaining a simulated test environment after running a test case comprising one or more test steps at the first portion; and in response to receiving the selection input selecting the fourth run option, terminating the simulated test environment after running the test case comprising the one or more test steps at the first portion.

According to example embodiments, the code in the first portion may be in a natural language format.

According to example embodiments, a non-transitory computer-readable recording medium is provided. The non-transitory computer-readable recording medium may have recorded thereon instructions executable by at least one processor to cause the at least one processor to perform a method including: generating a graphical user interface comprising at least a first portion and a second portion, wherein the first portion may include a portion for entering a code, and wherein the second portion may include a search area and a test steps area; receiving a search input from a user at the search area; displaying one or more test steps associated with the search input at the test steps area; receiving a selection input selecting one of the one or more test steps displayed at the test steps area from the user; and entering a code associated with the selected one of the one or more test steps in the first portion.

According to example embodiments, the first portion may further include a pop-up window; and the method may further include: receiving a partial code input from the user at the first portion; displaying one or more test steps associated with the partial code input at the pop-up window; receiving a selection input selecting one of the one or more test steps displayed at the pop-up window from the user; and replacing the partial code input with a code associated with the selected one of the one or more test steps in the first portion.

According to example embodiments, the method may be performed by a system comprising a memory storage that may include a plurality of predefined test steps; the one or more test steps associated with the search input may be obtained from the plurality of predefined test steps; the graphical user interface may further include an add option; and the method may further include: receiving a selection input selecting the add option, and a new test step from the user; and adding the new test steps to the plurality of predefined test steps.

According to example embodiments, the graphical user interface may further include a first run option and a second run option; and the method may further include: receiving a selection input selecting the first run option from the user, or a selection input selecting the second run option from the user; in response to receiving the selection input selecting the first run option, running a test case comprising one or more test steps at the first portion online by utilizing continuous integration and continue delivery; and in response to receiving the selection input selecting the second run option, running the test case comprising the one or more test steps at the first portion offline without utilizing continuous integration and continue delivery.

According to example embodiments, the graphical user interface may further include a third run option and a fourth run option; and the method may further include: receiving a selection input selecting the third run option from the user, or a selection input selecting the fourth run option from the user; in response to receiving the selection input selecting the third run option, maintaining a simulated test environment after running a test case comprising one or more test steps at the first portion; and in response to receiving the selection input selecting the fourth run option, terminating the simulated test environment after running the test case comprising the one or more test steps at the first portion.

According to example embodiments, the code in the first portion may be in a natural language format.

Additional aspects will be set forth in part in the description that follows and, in part, will be apparent from the description, or may be realized by practice of the presented embodiments of the disclosure.

### BRIEF DESCRIPTION OF THE DRAWINGS

Features, advantages, and significance of exemplary embodiments of the disclosure will be described below with reference to the accompanying drawings, in which like signs denote like elements, and wherein:
FIG. 1 illustrates a block diagram of example components in a Vehicle Software Testing (VST) system, according to one or more embodiments;
FIG. 2 illustrates an example test case, according to one or more embodiments;
FIG. 3 illustrates example components of a graphical user interface (GUI) for testing a vehicle software, according to one or more embodiments;
FIG. 4 illustrates a flow diagram of an example method for testing a vehicle software, according to one or more embodiments; and
FIG. 5 illustrates a flow diagram of an example method for testing a vehicle software, according to one or more embodiments.

### DETAILED DESCRIPTION

The following detailed description of example embodiments refers to the accompanying drawings. The same reference numbers in different drawings may identify the same or similar elements.

The foregoing disclosure provides illustration and description but is not intended to be exhaustive or to limit the implementations to the precise form disclosed. Modifications and variations are possible in light of the above disclosure or may be acquired from practice of the implementations. Further, one or more features or components of one embodiment may be incorporated into or combined with another embodiment (or one or more features of another embodiment). Additionally, in the flowcharts and descriptions of operations provided below, it is understood that one or more operations may be omitted, one or more operations may be added, one or more operations may be performed simultaneously (at least in part), and the order of one or more operations may be switched.

It will be apparent that systems and/or methods, described herein, may be implemented in different forms of hardware, firmware, or a combination of hardware and software. The actual specialized control hardware or software code used to implement these systems and/or methods is not limiting of the implementations. Thus, the operation and behavior of the systems and/or methods were described herein without reference to specific software code. It is understood that software and hardware may be designed to implement the systems and/or methods based on the description herein.

Even though particular combinations of features are recited in the claims and/or disclosed in the specification, these combinations are not intended to limit the disclosure of possible implementations. In fact, many of these features may be combined in ways not specifically recited in the claims and/or disclosed in the specification. Although each dependent claim listed below may directly depend on only one claim, the disclosure of possible implementations includes each dependent claim in combination with every other claim in the claim set.

No element, act, or instruction used herein should be construed as critical or essential unless explicitly described as such. Also, as used herein, the articles "a" and "an" are intended to include one or more items, and may be used interchangeably with "one or more." Where only one item is intended, the term "one" or similar language is used. Also, as used herein, the terms "has," "have," "having," "include," "including," or the like are intended to be openended terms. Further, the phrase "based on" is intended to mean "based, at least in part, on" unless explicitly stated otherwise. Furthermore, expressions such as "at least one of [A] and [B]", "[A] and/or [B]", or "at least one of [A] or [B]" are to be understood as including only A, only B, or both A and B.

It is contemplated that features, advantages, and significances of example embodiments described hereinabove are merely a portion of the present disclosure, and are not intended to be exhaustive or to limit the scope of the present disclosure.

Further descriptions of the features, components, configuration, operations, and implementations of the vehicle software testing system of the present disclosure, according to one or more embodiments, are provided in the following.

### Example System Architecture

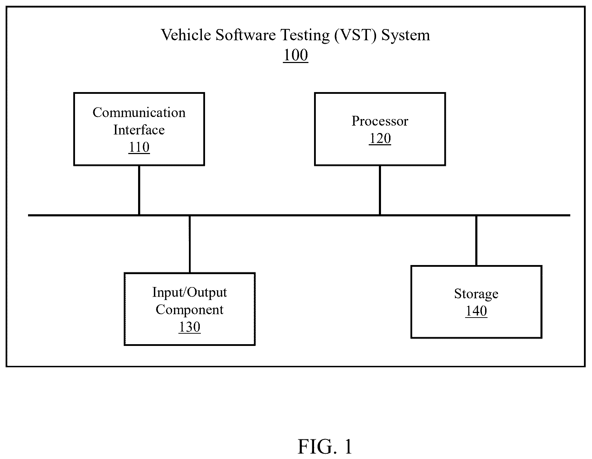

FIG. 1 illustrates a block diagram of example components in a Vehicle Software Testing (VST) system 100, according to one or more embodiments. The VST system 100 may include an apparatus, a system, a platform, a module, or the like, which may be configured to perform one or more operations or actions for testing a vehicle software.

As illustrated in FIG. 1, the VST system 100 may include at least one communication interface 110, at least one processor 120, at least one input/output component 130, and at least one storage 140, although it can be understood that the VST system 100 may include more or less components than as illustrated in FIG. 1, and/or may be arranged in a manner different from as illustrated in FIG. 1, without departing from the scope of the present disclosure.

The communication interface 110 may include at least one transceiver-like component (e.g., a transceiver, a separate receiver and transmitter, a bus, etc.) that enables the components of the VST system 100 to communicate with each other and/or to communicate with one or more components external to the VST system 100, such as via a wired connection, a wireless connection, or a combination of wired and wireless connections. For example, the communication interface 110 may include an Ethernet interface, an optical interface, a coaxial interface, an infrared interface, a radio frequency (RF) interface, a universal serial bus (USB) interface, a Wi-Fi interface, a cellular network interface, or the like.

For instance, the communication interface 110 may couple the processor 120 to the storage 140 to thereby enable them to communicate and to interoperate with each other in performing one or more operations.

According to one or more embodiments, the communication interface 110 may include one or more application programming interfaces (APIs) which allow the VST system 100 (or one or more components included therein) to communicate with one or more software applications.

The input/output component 130 may include at least one component that permits the VST system 100 to receive information and/or to provide output information. It can be understood that, in some embodiments, the input/output component 130 may include at least one input component (e.g., a touch screen display, a keyboard, a keypad, a mouse, a button, a switch, a microphone, etc.) and at least one output component (e.g., a display, a speaker, one or more light-emitting diodes (LEDs), etc.), each of which may be separated from each other. Additionally, or alternatively, the at least one input component may include a sensor for sensing information (e.g., a global positioning system (GPS) component, an accelerometer, a gyroscope, and/or an actuator).

The storage 140 may include one or more storage mediums suitable for storing data, information, and/or computer-executable instructions therein. According to example embodiments, the storage 140 may include at least one memory storage, such as a random access memory (RAM), a read only memory (ROM), and/or another type of dynamic or static storage device (e.g., a flash memory, a magnetic memory, and/or an optical memory) that stores information and/or instructions for use by the processor 120. Additionally or alternatively, the storage 140 may include a hard disk (e.g., a magnetic disk, an optical disk, a magneto-optic disk, and/or a solid state disk), a compact disc (CD), a digital versatile disc (DVD), a floppy disk, a cartridge, a magnetic tape, and/or another type of non-transitory computer-readable medium, along with a corresponding drive. A computer-readable medium is defined herein as a non-transitory memory device. A memory device includes memory space within a single physical storage device or memory space spread across multiple physical storage devices.

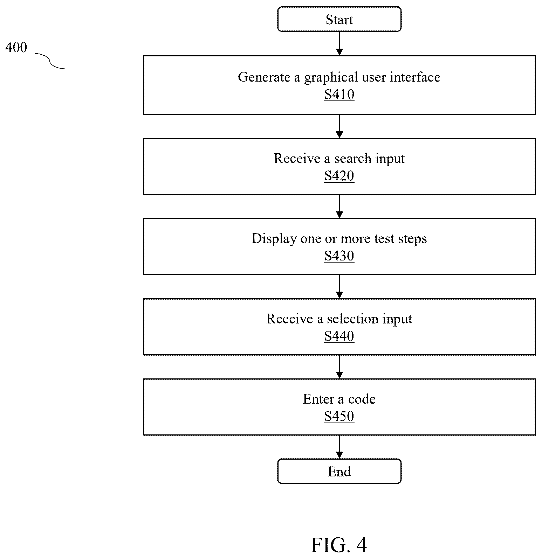

According to example embodiments, the storage 140 may be configured to store information, such as raw data, metadata, or the like. Additionally or alternatively, the storage 140 may be configured to store one or more information associated with one or more operations performed by the processor 120. For instance, the storage 140 may store information defining the historical operation(s) performed by the processor 120 to test a vehicle software, one or more results of operations performed by the processor 120, or the like. Further, the storage 140 may store data or information required in testing a vehicle software. For instance, the storage 140 may store at least a plurality of predefined test steps (described below with reference to FIG. 4).

In some implementation, the storage 140 may include a plurality of storage mediums, and the storage 140 may be configured to store a duplicate or a copy of at least a portion of the information in the plurality of storage mediums, for providing redundancy and for backing-up the information or the associated data. Furthermore, the storage 140 may also store computer-readable or computer-executable instructions which, when being executed by one or more processors (e.g., processor 120), causes the one or more processors to perform one or more actions/operations described herein

The processor 120 may include at least one processor capable of being programmed or being configured to perform a function(s) or an operation(s) described herein. For instance, the processor 120 may be configured to execute computer-executable instructions stored in at least one storage medium or a memory storage (e.g., storage 140, etc.) to thereby perform one or more actions or one or more operations described herein.

According to example embodiments, the processor 120 may be configured to receive (e.g., via the communication interface 110, via the input/output component 130, etc.) one or more signals and/or one or more user inputs defining one or more instructions for performing one or more operations. Further, the processor 120 may be implemented in hardware, firmware, or a combination of hardware and software. For instance, processor 120 may include at least one of a central processing unit (CPU), a graphics processing unit (GPU), an accelerated processing unit (APU), a microprocessor, a microcontroller, a digital signal processor (DSP), a field-programmable gate array (FPGA), an application-specific integrated circuit (ASIC), and/or another type of processing or computing component.

According to example embodiments, the processor 120 may be configured to collect, to extract, and/or to receive one or more information (in the form of signal or data, etc.), and to process the received one or more information to thereby test a vehicle software.

The number and arrangement of components shown in FIG. 1 are provided as an example. In practice, VST system 100 may include additional components, fewer components, different components, or differently arranged components than those shown in FIG. 1. Additionally, or alternatively, a set of components (e.g., one or more components) of VST system 100 may perform one or more functions described as being performed by another set of components of VST system 100.

Descriptions of several example operations which may be performed by the processor 120 are provided below with reference to FIG. 4 to FIG. 5.

### Example of Vehicle Software Testing in the Present Disclosure

According to example embodiments, in order to test a vehicle software, one or more test cases may be designed and run within a test environment.

The test case may refer to a specific set of conditions and/or steps that are designed to verify the functionality or behavior of the software (or the system under test). The test case may define one or more actions and expected outcomes for a particular test scenario. The conditions and/or steps that are designed to verify the functionality or behavior of the software may be referred to as test steps included in the test case. According to example embodiments, one or more test steps may be included in a test case, which may include one or more of: a test case ID (e.g., a unique identifier or a set of numbers assigned to the test case for tracking and reference purpose), a test objective (e.g., description or specification of the goal or purpose of the test case), at least one test condition (e.g., precondition or initial state required for executing the test case, specific setup or configuration needed in order to trigger the test execution, etc.), at least one test operation (e.g., action or operation to be performed to execute the test case, necessary inputs or interactions with the software, etc.), at least one expected result (e.g., the anticipated outcomes or behaviors that are expected from the software when the test case is executed successfully, etc.), and any other suitable information.

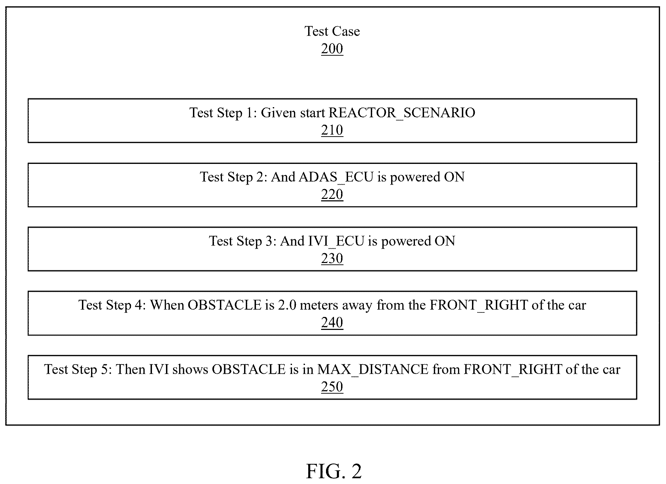

FIG. 2 illustrates an example test case, according to one or more embodiments. The test case 200 may include five test steps: test step 1 210, test step 2 220, test step 3 230, test step 4 240, and test step 5 250. It can be understood that the configuration illustrated in FIG. 2 is simplified for descriptive purpose, and is not intended to limit the scope of the present disclosure in any way. For example, in practice, the number of test steps within a test case can be any number, and the specific content and format of the test steps can be any.

As illustrated in FIG. 2, the test step 1 210 may include a step "Given start REACTOR_SCENARIO", which defines an action of starting a test environment comprising predefined conditions and/or elements which the test case is to be run on (see below for details). The test step 2 220 may include a step "And ADAS_ECU is powered ON", which defines an action of starting the Advanced Driver Assistance System (ADAS) electronic control unit (ECU) within the test environment. Similarly, the test step 3 230 may include a step "And IVI_ECU is powered ON", which defines an action of starting the In-Vehicle Infotainment (IVI) electronic control unit (ECU) within the test environment.

The test step 4 240 may include a step "When OBSTACLE is 2.0 meters away from the FRONT_RIGHT of the car", which defines a conditional scenario where an obstacle is 2.0 meters away from the front right side of the car. The test step 5 250 may include a step "Then IVI shows OBSTACLE is in MAX_DISTANCE from FRONT_RIGHT of the car", which defines an expected outcome of the conditional scenario defined in test step 4 240 where the in-vehicle infotainment shows that the obstacle is at max distance from the front right side of the car.

The test environment may refer to a specific set of conditions and/or elements which the test case is to be run on (against). In particular, the test environment may include one or more vehicle elements that are involved in the test case. The one or more vehicle elements may refer to one or more elements associated with one or more components of a vehicle, such as electronic control units (ECUs). For example, for a test case designed to test a software related to detecting and displaying obstacles near the vehicle's rear, the test environment may include the IVI ECU and ADAS ECU of the vehicle (one or more vehicle elements). According to example embodiments, the test environment may further include one or more environment elements that are involved in the test case. The one or more environment elements may refer to one or more elements associated with an environment of a vehicle. For example, for the test case designed to test the software related to detecting and displaying obstacles near the vehicle's rear, the test environment may further include obstacles near the vehicle's rear and rain (one or more environment elements), such that the test case may be able to evaluate the software associated with the IVI ECU and ADAS ECU of the vehicle when they are detecting and displaying obstacles near the vehicle's rear during the rain.

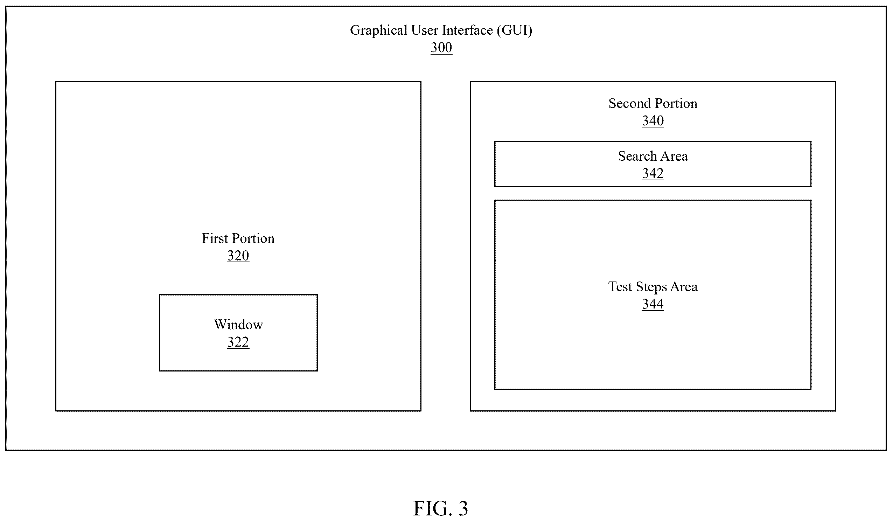

FIG. 3 illustrates example components of a graphical user interface (GUI) for testing a vehicle software, according to one or more embodiments.

As shown in FIG. 3, the graphical user interface (GUI) 300 may include at least a first portion 320 and a second portion 340.

According to example embodiments, the first portion 320 may include a portion for entering a code. The code may be associated with a test step. For example, the user may manually enter a code associated with a test step in the first portion in the similar manner as described above in relation to FIG. 2, such that said test step is added to the test case.

According to example embodiments, the code associated with the test step in the first portion may be in a computer programming language format, such as Python and the like. According to example embodiments, the code associated with the test step in the first portion may be in a natural language format, such as a Gherkin programming language format. This allows test steps to be entered and reviewed easily without requiring the user to have extensive knowledge in low-level programming, and allows the test case to be designed in a behavior driven manner.

According to example embodiments, the second portion 340 may include at least a search area 342 and a test steps area 344. Here, it may be understood that the memory storage of the VST system may store a plurality of predefined test steps. The plurality of predefined test steps may be test steps that have been predefined and stored by a software developer, which can be searched by a user of the GUI 300.

In particular, the user may provide a search input to the search area 342, where the VST system may then obtain (search) one or more test steps associated with the search input from the stored plurality of predefined test steps, and display the obtained one or more test steps at the test steps area 344.

According to example embodiments, the search input may include any kind of key word associated with a test step, such as a name of a test step, a type of a test step, and the like. Further, the plurality of predefined test steps may be grouped into types of test steps, and/or be assigned a tag for searching based on their types. For example, test steps associated with CAN communication may be assigned with CAN communication tag and/or be grouped into a CAN communication group, such that, when the user inputs "CAN" or "CAN communication" (i.e., when the search input includes "CAN" or "CAN communication") in the search area 342, all test steps assigned with the CAN communication tag and/or all test steps within the CAN communication group (i.e., all test steps associated with CAN communication) may be displayed in the test steps area 344.

Once the obtained one or more test steps are displayed at the test steps area 344, the user may then provide a selection input selecting one of the one or more test steps displayed at the test steps area 344. According to example embodiments, the user may provide the selection input by dragging and dropping a test step from the test steps area 344 onto the first portion 320. According to example embodiments, the user may provide the selection input by clicking on a test step in the test steps area 344.

Further, once the selection input is received from the user, the VST system may automatically enter a code associated with the selected one of the one or more test steps in the first portion 320. It may be understood that the code entered at the first portion 320 may be edited and removed as desired by the user. Accordingly, test steps may be quickly searched and added to the first portion 320 (and to the test case) without the user having to manually type in test steps.

According to example embodiments, the first portion 320 may also include a window 322. The window 322 may be a pop-up window which shows (pop-up) as the user is typing the code into the first portion 320.

In particular, the user may provide a partial code input to the first portion 320 of the GUI 300. As the user is providing the partial code input, the VST system may obtain and display one or more test steps associated with the partial code input at the window 322. For example, the VST system may display one or more test steps most similar to the partial code input at the window 322. It may be understood that the test steps displayed at the window 322 may be obtained from the stored plurality of predefined test steps, in the similar manner as the test steps displayed at the test steps area 344.

The user may then provide a selection input selecting one of the one or more test steps displayed at the window 322, where the VST system may then automatically replace (fill in) the partial code input with a full code associated with the selected one of the one or more test steps in the first portion 320.

For example, the user may be typing a first part of a code associated with a particular test step (i.e., partial code input) in the first portion 320, and the VST system may then determine and display one or more test steps that are associated with the codes that are most similar to such first part (which would include the particular test step that the user is trying to type) at the window 322. Here, the user may select the particular test step that the user is trying to type in the window 322, where the VST system may then automatically fill in the remaining portions of the particular test step (replace the first part of the code that is already entered into the first portion 320 with a code (full code) associated with the selected particular test step). Alternatively, the user may select another test step at the window 322 (e.g., the user enters a wrong but similar code initially), where the VST system may then automatically replace the first part of the code that is already entered into the first portion 320 with a code (full code) associated with the selected another test step.

Accordingly, test steps may be quickly searched and added to the first portion 320 (and to the test case) without the user having to manually type in the entirety of the test step.

According to example embodiments, the GUI 300 may further include an add option (not shown), where the user may be able to add new test steps into the plurality of predefined test steps stored in the memory storage.

In particular, the user may provide a selection input selecting the add option, along with a new test step, where the VST system may then add the received new test step into the plurality of predefined test steps (i.e., store the received new test step in the memory storage). Subsequently, the new test step may be searched and displayed (at the test steps area 344 and/or at the window 322) in the similar manner as described above. According to example embodiments, once a test step is searched and entered into the first portion 320 in the similar manner as explained above, the user may edit said test step and then add the edited test step as a new test step to the plurality of predefined test steps.

According to example embodiments, the GUI 300 may further include a plurality of options (not shown) for configuring an execution of the test case.

In particular, in order to run (execute) the test case in the test environment, the test case may be run online by utilizing continuous integration and continue delivery (CICD) framework, such that the test case may be uploaded onto a server and be accessed by a group of users. As such, according to example embodiments, the GUI 300 may further include a first run option and a second run option. In response to receiving a selection input selecting the first run option from the user, the VST system may upload and run (execute) a test case including one or more test steps at the first portion online 320 by utilizing the CICD framework. On the other hand, in response to receiving a selection input selecting the second run option from the user, the VST system may run a test case including one or more test steps at the first portion 320 offline without utilizing the CICD framework.

Accordingly, the VST system may allow the user to quickly switch between an online execution where a test case may be uploaded and accessed by a group of other users, and an offline execution where a test case may be executed quickly while avoiding risks of uploading undesirable test case onto the server.

Further, in order to run the test case in the test environment, a simulated test environment may be generated for each run (each execution) of a test case. Once the simulated test environment is generated for a run of a test case, said simulated test environment may be terminated after the test case is completed. As such, according to example embodiments, the GUI 300 may further include a third run option and a fourth run option. In response to receiving a selection input selecting the third run option from the user, the VST system may maintain a simulated test environment after running a test case comprising one or more test steps at the first portion 320. On the other hand, in response to receiving a selection input selecting the fourth run option from the user, the VST system may terminate a simulated test environment after running a test case comprising one or more test steps at the first portion 320.

Accordingly, the VST system may allow the user to quickly switch between an execution that maintains the simulated test environment which allows a subsequent test case to be executed on the same simulated test environment quickly without having to restart the simulated test environment for every execution of the same or different test case, and an execution that terminates the simulated test environment which saves resources.

It can be understood that the configuration illustrated in FIG. 3 is simplified for descriptive purpose, and is not intended to limit the scope of the present disclosure in any way. For example, in practice, the relative position, relative size, and/or shape of each of the elements within the GUI 300 can be any.

### Example Operations for Testing a Vehicle Software in the Present Disclosure

In the following, several example operations performable by the VST system of the present disclosure are described with reference to FIG. 4 to FIG. 5.

FIG. 4 illustrates a flow diagram of an example method 400 for testing a vehicle software, according to one or more embodiments. One or more operations in method 400 may be performed by at least one processor (e.g., processor 120) of the VST system.

As illustrated in FIG. 4, at operation S410, the at least one processor may be configured to generate a graphical user interface. The graphical user interface may include at least a first portion and a second portion, where the first portion may include a portion for entering a code, and where the second portion may include a search area and a test steps area. The method then proceeds to operation S420.

At operation S420, the at least one processor may be configured to receive a search input. The search input may be received from a user at the search area. The method then proceeds to operation S430.

At operation S430, the at least one processor may be configured to display one or more test steps associated with the search input. According to example embodiments, the one or more test steps may include one or more of: a test case ID (e.g., a unique identifier or a set of numbers assigned to the test case for tracking and reference purpose), a test objective (e.g., description or specification of the goal or purpose of the test case), at least one test condition (e.g., precondition or initial state required for executing the test case, specific setup or configuration needed in order to trigger the test execution, etc.), at least one test operation (e.g., action or operation to be performed to execute the test case, necessary inputs or interactions with the software, etc.), at least one expected result (e.g., the anticipated outcomes or behaviors that are expected from the software when the test case is executed successfully, etc.), and any other suitable information. Further, a test step may be associated with an code, and may be displayed at the test steps area.

According to example embodiments, the at least one processor may be configured to display the one or more test steps associated with the search input by obtaining (searching) one or more test steps based on the search input, and then displaying the obtained one or more test steps.

According to example embodiments, the one or more test steps may be obtained based on the search input by determining one or more key words from the search input. For example, the one or more key words in the search input may include a name of a test step, a type of a test step, and the like. According to example embodiments, the one or more test steps may be obtained based on the search input by further obtaining one or more test steps that are associated with the determined one or more key words. For example, the at least one processor may be configured to obtain one or more test steps that have a similar name as a name of a test step included in the search input. In another example, the at least one processor may be configured to obtain one or more test steps that are within a group or one or more test steps that have a tag that is similar to a type of a test step included in the search input.

According to example embodiments, the memory storage of the VST system may include a plurality of predefined test steps, and the one or more test steps (i.e., the one or more test steps associated with the search input) may be obtained from the plurality of predefined test steps. The method then proceeds to operation S440.

At operation S440, the at least one processor may be configured to receive a selection input. The selection input may be received from the user, and may be for selecting one of the one or more test steps displayed at the test steps area. According to example embodiments, the selection input may include a drag-and-drop input. According to example embodiments, the selection input may include a click input. The method then proceeds to operation S450.

At operation S450, the at least one processor may be configured to enter a code associated with the selected one of the one or more test steps in the first portion. According to example embodiments, the code in the first portion (i.e., the code manually entered by the user and the code entered automatically by the VST system in the first portion) may be in a natural language format. According to example embodiments, the code in the first portion may be in a computer programming language format.

Upon performing operation S450, the method 400 may be ended or be terminated. Alternatively, method 400 may return to operation S420, such that the at least one processor may be configured to repeatedly perform, for at least a predetermined amount of time, the receiving the search input (at operation S420), the displaying the one or more test steps (at operation S430), the receiving the selection input (at operation S440), and the entering the code (at operation S450). For instance, the user may continuously (or periodically) search for more test steps. Accordingly, the at least one processor may continuously (or periodically) receive the search input, and then restart the receiving the search input (at operation S420), the displaying the one or more test steps (at operation S430), the receiving the selection input (at operation S440), and the entering the code (at operation S450).

According to example embodiments, the at least one processor may be configured to receive a selection input selecting an add option in the graphical user interface, and a new test step from the user. In response to receiving the selection input selecting the add option, the at least one processor may be configured to add the new test steps to the plurality of predefined test steps.

According to example embodiments, the at least one processor may be configured to receive a selection input selecting a first run option in the graphical user interface from the user, or a selection input selecting a second run option in the graphical user interface from the user. In response to receiving the selection input selecting the first run option, the at least one processor may be configured to run a test case comprising one or more test steps at the first portion online by utilizing continuous integration and continue delivery. In response to receiving the selection input selecting the second run option, the at least one processor may be configured to run the test case comprising the one or more test steps at the first portion offline without utilizing continuous integration and continue delivery.

According to example embodiments, the at least one processor may be configured to receive a selection input selecting a third run option in the graphical user interface from the user, or a selection input selecting a fourth run option in the graphical user interface from the user. In response to receiving the selection input selecting the third run option, the at least one processor may be configured to maintain a simulated test environment after running a test case comprising one or more test steps at the first portion. In response to receiving the selection input selecting the fourth run option, the at least one processor may be configured to terminate the simulated test environment after running the test case comprising the one or more test steps at the first portion.

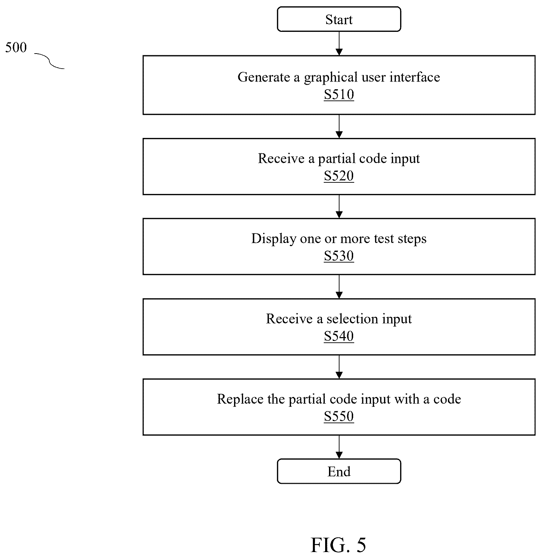

FIG. 5 illustrates a flow diagram of an example method 500 for testing a vehicle software, according to one or more embodiments. One or more operations in method 500 may be performed by at least one processor (e.g., processor 120) of the VST system.

As illustrated in FIG. 5, at operation S510, the at least one processor may be configured to generate a graphical user interface. The graphical user interface may include at least a first portion, where the first portion may include a portion for entering a code and a pop-up window. The method then proceeds to operation S520.

At operation S520, the at least one processor may be configured to receive a partial code input. The partial code input may be received from a user at the first portion. Further, it may be understood that the partial code input may be a part of a code (full code) that is associated with a test step. The method then proceeds to operation S530.

At operation S530, the at least one processor may be configured to display one or more test steps associated with the partial code input. The one or more test steps may be displayed at the pop-up window.

According to example embodiments, the at least one processor may be configured to display the one or more test steps associated with the partial code input by obtaining (searching) one or more test steps based on the partial code input, and then displaying the obtained one or more test steps.

According to example embodiments, the one or more test steps may be obtained based on the partial code input by determining one or more test steps that are most similar to the partial code input. For example, the user may be typing a first part of a code associated with a particular test step (i.e., partial code input) in the first portion, and the VST system may then determine one or more test steps that are associated with the codes that are most similar to such first part. The method then proceeds to operation S540.

At operation S540, the at least one processor may be configured to receive a selection input. The selection input may be received from the user, and may be for selecting one of the one or more test steps displayed at the pop-up window. The method then proceeds to operation S550.

At operation S550, the at least one processor may be configured to replace the partial code input with a code (i.e., full code) associated with the selected one of the one or more test steps in the first portion.

Upon performing operation S550, the method 500 may be ended or be terminated. Alternatively, method 500 may return to operation S520, such that the at least one processor may be configured to repeatedly perform, for at least a predetermined amount of time, the receiving the partial code input (at operation S520), the displaying the one or more test steps (at operation S530), the receiving the selection input (at operation S540), and the replacing the partial code input (at operation S550).

For instance, the user may continuously (or periodically) type in more codes at the first portion. Accordingly, the at least one processor may continuously (or periodically) receive the partial code input, and then restart the receiving the partial code input (at operation S520), the displaying the one or more test steps (at operation S530), the receiving the selection input (at operation S540), and the replacing the partial code input (at operation S550).

According to example embodiments, one or more operations in method 400 and one or more operations in method 500 may be combined. For example, the user may first search for and select a first test step via the search area and the test step area (where operation S320 to operation S350 are performed), and may then type a partial code and select a code for a second test step at the pop-up window (where operation S520 to operation S550 are performed).

### Various Aspects of Embodiments

The foregoing disclosure provides illustration and description, but is not intended to be exhaustive or to limit the implementations to the precise form disclosed. Modifications and variations are possible in light of the above disclosure or may be acquired from practice of the implementations.

Some embodiments may relate to a system, a method, and/or a computer readable medium at any possible technical detail level of integration. Further, one or more of the above components described above may be implemented as instructions stored on a computer readable medium and executable by at least one processor (and/or may include at least one processor). The computer readable medium may include a computer-readable non-transitory storage medium (or media) having computer readable program instructions thereon for causing a processor to carry out operations.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program code/instructions for carrying out operations may be assembler instructions, instruction-set-architecture (ISA) instructions, machine instructions, machine dependent instructions, microcode, firmware instructions, state-setting data, configuration data for integrated circuitry, or either source code or object code written in any combination of one or more programming languages, including an object oriented programming language such as Smalltalk, C++, or the like, and procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects or operations.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods, and computer readable media according to various embodiments. In this regard, each block in the flowchart or block diagrams may represent a microservice(s) module, segment, or portion of instructions, which comprises one or more executable instructions for implementing the specified logical function(s). The method, computer system, and computer readable medium may include additional blocks, fewer blocks, different blocks, or differently arranged blocks than those depicted in the Figures. In some alternative implementations, the functions noted in the blocks may occur out of the order noted in the Figures. For example, two blocks shown in succession may, in fact, be executed concurrently or substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

It will be apparent that systems and/or methods, described herein, may be implemented in different forms of hardware, firmware, or a combination of hardware and software. The actual specialized control hardware or software code used to implement these systems and/or methods is not limiting of the implementations. Thus, the operation and behavior of the systems and/or methods were described herein without reference to specific software code-it being understood that software and hardware may be designed to implement the systems and/or methods based on the description herein.

It can be understood that numerous modifications and variations of the present disclosure are possible in light of the above teachings. It will be apparent that within the scope of the appended clauses, the present disclosures may be practiced otherwise than as specifically described herein.

## Claims

1. A system comprising:
a memory storage storing computer-executable instructions; and
at least one processor communicatively coupled to the memory storage, wherein the at least one processor is configured to execute the instructions to:
generate a graphical user interface comprising at least a first portion and a second portion, wherein the first portion comprises a portion for entering a code, and wherein the second portion comprises a search area and a test steps area;
receive a search input from a user at the search area;
display one or more test steps associated with the search input at the test steps area;
receive a selection input selecting one of the one or more test steps displayed at the test steps area from the user; and
enter a code associated with the selected one of the one or more test steps in the first portion.

2. The system according to claim 1, wherein the selection input comprises a drag-and-drop input.

3. The system according to claim 1 or 2, wherein:
the first portion further comprises a pop-up window; and
the at least one processor is further configured to execute the instructions to:
receive a partial code input from the user at the first portion;
display one or more test steps associated with the partial code input at the pop-up window;
receive a selection input selecting one of the one or more test steps displayed at the pop-up window from the user; and
replace the partial code input with a code associated with the selected one of the one or more test steps in the first portion.

4. The system according to any one of claims 1 to 3, wherein:
the memory storage comprises a plurality of predefined test steps;
the one or more test steps associated with the search input are obtained from the plurality of predefined test steps;
the graphical user interface further comprises an add option; and
the at least one processor is further configured to execute the instructions to:
receive a selection input selecting the add option, and a new test step from the user; and
add the new test steps to the plurality of predefined test steps.

5. The system according to any one of claims 1 to 4, wherein:
the graphical user interface further comprises a first run option and a second run option; and
the at least one processor is further configured to execute the instructions to:
receive a selection input selecting the first run option from the user, or a selection input selecting the second run option from the user;
in response to receiving the selection input selecting the first run option, run a test case comprising one or more test steps at the first portion online by utilizing continuous integration and continue delivery; and
in response to receiving the selection input selecting the second run option, run the test case comprising the one or more test steps at the first portion offline without utilizing continuous integration and continue delivery.

6. The system according to any one of claims 1 to 5, wherein:
the graphical user interface further comprises a third run option and a fourth run option; and
the at least one processor is further configured to execute the instructions to:
receive a selection input selecting the third run option from the user, or a selection input selecting the fourth run option from the user;
in response to receiving the selection input selecting the third run option, maintain a simulated test environment after running a test case comprising one or more test steps at the first portion; and
in response to receiving the selection input selecting the fourth run option, terminate the simulated test environment after running the test case comprising the one or more test steps at the first portion.

7. The system according to any one of claims 1 to 6, wherein the code in the first portion is in a natural language format.

8. A method comprising:
generating a graphical user interface comprising at least a first portion and a second portion, wherein the first portion comprises a portion for entering a code, and wherein the second portion comprises a search area and a test steps area;
receiving a search input from a user at the search area;
displaying one or more test steps associated with the search input at the test steps area;
receiving a selection input selecting one of the one or more test steps displayed at the test steps area from the user; and
entering a code associated with the selected one of the one or more test steps in the first portion.

9. The method according to claim 8, wherein the selection input comprises a drag-and-drop input.

10. The method according to claim 8 or 9, wherein:
the first portion further comprises a pop-up window; and
the method further comprises:
receiving a partial code input from the user at the first portion;
displaying one or more test steps associated with the partial code input at the pop-up window;
receiving a selection input selecting one of the one or more test steps displayed at the pop-up window from the user; and
replacing the partial code input with a code associated with the selected one of the one or more test steps in the first portion.

11. The method according to any one of claims 8 to 10, wherein:
the method is performed by a system comprising a memory storage that comprises a plurality of predefined test steps;
the one or more test steps associated with the search input are obtained from the plurality of predefined test steps;
the graphical user interface further comprises an add option; and
the method further comprises:
receiving a selection input selecting the add option, and a new test step from the user; and
adding the new test steps to the plurality of predefined test steps.

12. The method according to any one of claims 8 to 11, wherein:
the graphical user interface further comprises a first run option and a second run option; and
the method further comprises:
receiving a selection input selecting the first run option from the user, or a selection input selecting the second run option from the user;
in response to receiving the selection input selecting the first run option, running a test case comprising one or more test steps at the first portion online by utilizing continuous integration and continue delivery; and
in response to receiving the selection input selecting the second run option, running the test case comprising the one or more test steps at the first portion offline without utilizing continuous integration and continue delivery.

13. The method according to any one of claims 8 to 12, wherein:
the graphical user interface further comprises a third run option and a fourth run option; and
the method further comprises:
receiving a selection input selecting the third run option from the user, or a selection input selecting the fourth run option from the user;
in response to receiving the selection input selecting the third run option, maintaining a simulated test environment after running a test case comprising one or more test steps at the first portion; and
in response to receiving the selection input selecting the fourth run option, terminating the simulated test environment after running the test case comprising the one or more test steps at the first portion.

14. The method according to any one of claims 8 to 13, wherein the code in the first portion is in a natural language format.

15. A computer program causing a system to perform a method comprising:
generating a graphical user interface comprising at least a first portion and a second portion, wherein the first portion comprises a portion for entering a code, and wherein the second portion comprises a search area and a test steps area;
receiving a search input from a user at the search area;
displaying one or more test steps associated with the search input at the test steps area;
receiving a selection input selecting one of the one or more test steps displayed at the test steps area from the user; and
entering a code associated with the selected one of the one or more test steps in the first portion.
